# EUROPEAN PATENT SPECIFICATION

(11) **EP 0 896 844 B1**
(45) Date of publication and mention of the grant of the patent: **09.01.2002**
(21) Application number: 98305598.9
(22) Date of filing: 14.07.1998
(51) Int. Cl.: B23B 29/034

(54) **Boring tool**
Ausdrehwerkzeug
Outil à aléser

(30) Priority: 12.08.1997 US 910158
(43) Date of publication of application: 17.02.1999
(73) Proprietor: Industrias Romi S.A., 13453-900 Santa Barbara d'Oeste, Sao Paulo (BR)
(72) Inventor: Romi, José Carlos, Santa Bárbara d'Oeste, Sao Paulo (BR)
(74) Representative: Needle, Jacqueline

(56) References cited:
- EP-A- 0 593 223
- CH-A- 354 646

## Description

The present invention relates to a boring device for finishing high precision bores.

CH-A-354646 describes a boring device for finishing high precision bores comprising a generally cylindrical body, a tool supporting member supported by and movable with respect to said cylindrical body, a rotatable ring mounted on said body for rotation about a longitudinal axis of the cylindrical body, and moving means for causing linear movement of said tool supporting member upon rotation of said rotatable ring.

The present invention seeks to provide a boring device which has a novel structure for the moving means.

According to the present invention, a boring device as defined above is characterised in that said moving means comprises a crossbeam extending substantially perpendicularly to the longitudinal axis of said cylindrical body and received within an axially extending slot in said cylindrical body, said crossbeam carrying an elongate rod slidably engaged within said tool supporting member, and said crossbeam being threadingly engaged with said rotatable ring such that rotation of said ring causes linear movement of said crossbeam within said axially extending slot.

It has been found that a boring device of the invention, incorporating moving means as defined above, is able to provide accurate radial displacement of the tool supporting member.

In an embodiment, said crossbeam has a respective thread provided at each of its ends, said threads on said crossbeam directly engaging an internal thread of said rotatable ring.

Preferably, said elongate rod is fixed to said crossbeam, and said elongate rod comprises a first part extending substantially along the longitudinal axis of said cylindrical body, and a second oblique part extending at an angle to said longitudinal axis.

In a preferred embodiment, the oblique part of said elongate rod is engaged with said tool supporting member, and said tool supporting member is mounted on said cylindrical body for movement generally perpendicularly to the longitudinal axis of the cylindrical body.

Preferably, the boring device further comprises backlash suppression means for suppressing backlash between said crossbeam and said rotatable ring, said backlash suppression means comprising at least one backlash suppression screw arranged to suppress play between engaged threads of the crossbeam and said rotatable ring.

The distinctive backlash suppression means incorporated within the boring device as defined above provides a precision to the boring device which is comparable to that of a micrometer. In practice, this means that a user may utilise a boring device as defined without necessarily using a micrometer to check the finished bore when the tolerance is one micron (0.001 millimetre) or less.

In an embodiment, the backlash suppression means may comprise an elongate slot, defined between facing slot surfaces, extending in said crossbeam and opening into a thread of the crossbeam engaged with a thread of the rotatable ring, and wherein the backlash suppression screw extends in said crossbeam to engage one of said facing slot surfaces to urge said facing surfaces apart.

Preferably, said crossbeam has a respective thread at each of its ends, and a respective elongate slot and a corresponding backlash suppression screw are associated with each thread of the crossbeam.

In an embodiment, a connecting flange is fixed to said cylindrical body, and aligned bores in said connecting flange and cylindrical body enable access to the or each backlash suppression screw.

The or each backlash suppression screw may extend generally perpendicularly with respect to the or the respective elongate slot.

In an embodiment, the or each elongate slot extends substantially radially of said crossbeam.

In an embodiment, said rotatable ring is mounted on said cylindrical body by way of bearing balls.

In an embodiment, a connecting flange is connected to said cylindrical body, and bearing balls are arranged at the spaced axial ends of said rotatable ring. In this embodiment, the bearing balls at one axial end of the rotatable ring are mounted on said cylindrical body, and the bearing balls at the other axial end of the rotatable ring are mounted on said connecting flange.

Preferably, said rotatable ring is arranged coaxially with respect to the longitudinal axis of said cylindrical body.

In an embodiment, said rotatable ring is manually rotatable. Preferably, the rotatable ring is externally graduated.

Embodiments of the present invention will hereinafter be described, by way of example, with reference to the accompanying drawings, in which:
Figure 1 shows a longitudinal cross section through a boring device of an embodiment of the invention for finishing high precision bores,
Figure 2 is a cross section taken along the line A-A of Figure 1,
Figure 3 is a cross section taken along the line B-B of Figure 1,
Figure 4 is a longitudinal section showing the mounting of a tool supporting member taken along the line C-C of Figure 1, and
Figure 5 is an enlarged detail D of Figure 1 showing backlash suppression means.

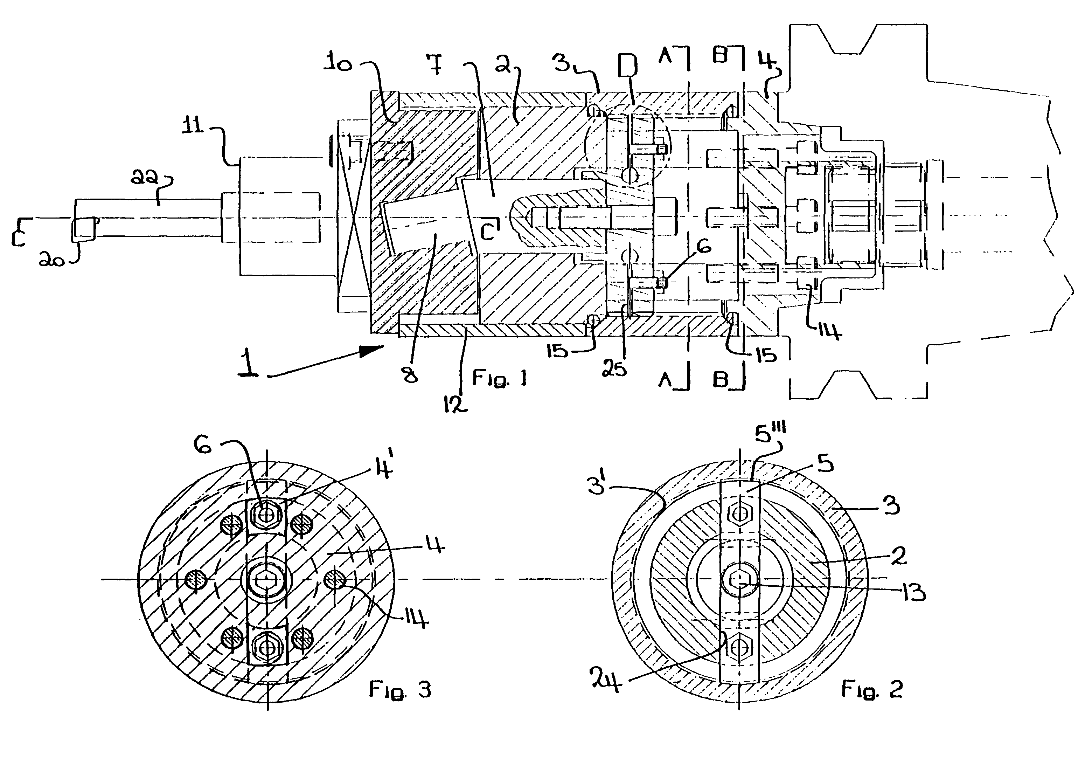

Figure 1 shows a micrometric boring device 1 which may be used for finishing both through and blind bores. The tool holder 22 of a cutting tool 20 is received within a tool shank 11 which is supported on a movable tool support 10 carried at the front of the boring device 1. The boring device 1 is provided with a movement transmission mechanism which comprises a rotatable ring 3 mounted to be rotatable relative to a generally cylindrical body 2. A substantially cylindrical housing 12 surrounds the cylindrical body 2. As described below, rotation of the ring 3 is arranged to cause movement of the tool support 10 perpendicularly to the longitudinal axis of the cylindrical body 2 whereby radial displacement of the cutting tool 20 is achieved.

In the boring device 1 illustrated, the rotatable ring 3 of the movement transmission mechanism is manually rotatable and externally graduated. The ring 3 is arranged coaxially with respect to the cylindrical body 2 and is mounted for rotation thereon by way of bearing balls 15 arranged at each of its axial ends. At the rear axial end of the ring 3, the bearing balls 15 co-operate with a connecting flange 4 which is fixed to the cylindrical body 2 by way of screws 14. In this respect, the screws 14 engage in a slotted, rearwardly extending part of the cylindrical body 2. It will be appreciated that the bearing balls 15 ensure easy and effective rotation of the ring 3 relative to the body 2. Furthermore, as the bearing balls 15 are supported at one axial end of the rotatable ring 3 on the cylindrical body 2, but on the other axial end thereof on the connecting flange 4, the fixing of the connecting flange 4 to the cylindrical body 2 by way of screws 14 ensures perfect mounting of the ring 3 between the cylindrical body 2 and the connecting flange 4.

The rearwardly extending part of the cylindrical body 2 is provided with an axially extending slot 24 (Figure 2) in which a crossbeam 5 is slidably received. The crossbeam 5 extends within and across the cylindrical body 2 substantially perpendicularly with respect to the longitudinal axis thereof. As can be seen in Figure 2, at each of its ends, the crossbeam 5 is provided with a respective thread 5"' which is engaged with an internal thread 3' of the rotatable ring 3. It will therefore be appreciated that rotation of the ring 3 causes movement of the crossbeam 5 generally longitudinally of the cylindrical body 2 within the axially extending slot 24. It will also be appreciated that the slot 24 prevents rotation of the crossbeam 5 upon rotation of the ring 3.

The movement of the crossbeam 5 generally longitudinally of the cylindrical body 2 causes axial movement of an elongate rod 7 serving as a moving piston 7. This elongate rod 7 extends axially within the cylindrical body 2 and is fixed to the crossbeam 5 for movement therewith by way of a connecting screw 13. The elongate rod 7 is generally cylindrical and has, at its front end, an oblique portion or extension 8 whose geometric axis is at an angle to the longitudinal axis of the cylindrical body 2. Thus, the linear movement of the rod 7 causes the oblique extension 8 to displace the tool support member 10 generally radially.

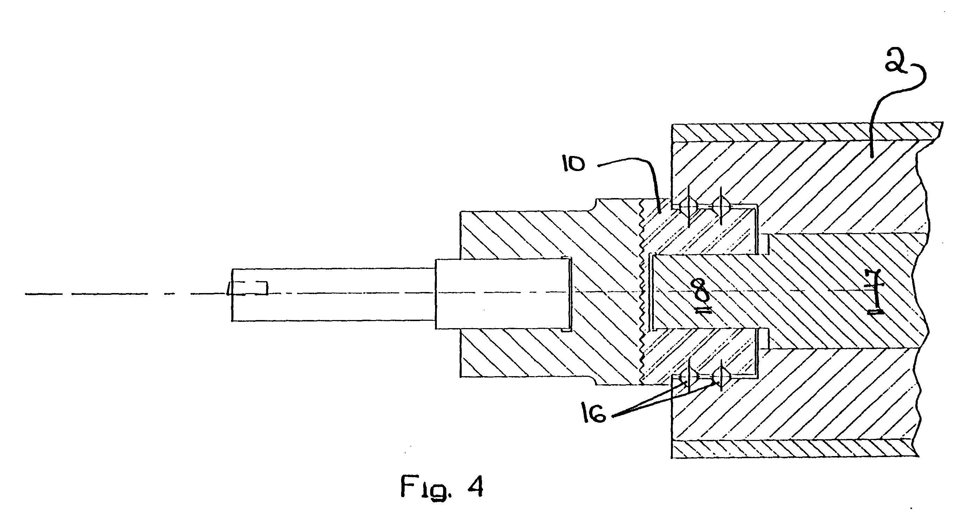

The mounting of the tool support member 10 and its movement by way of the oblique extension 8 may be substantially as described, for example, in European patent No. 0593223. In this respect, the movement of the tool support member 10 is guided by balls 16 (Figure 4) arranged between external walls of the tool support member 10 and internal walls of the cylindrical body 2. In the embodiment illustrated, the balls 16 are arranged in substantially V-shaped cuts or grooves in the walls of the cylindrical body 2 and of the tool support member 10, again substantially as is described in European patent No. 0593223. The balls 16 in their respective guideways, defined by the cuts or grooves, enable displacement of the tool support member 10 in a direction substantially perpendicular to the longitudinal axis of the cylindrical body 2 and ensure that that displacement is achieved substantially without backlash and without friction.

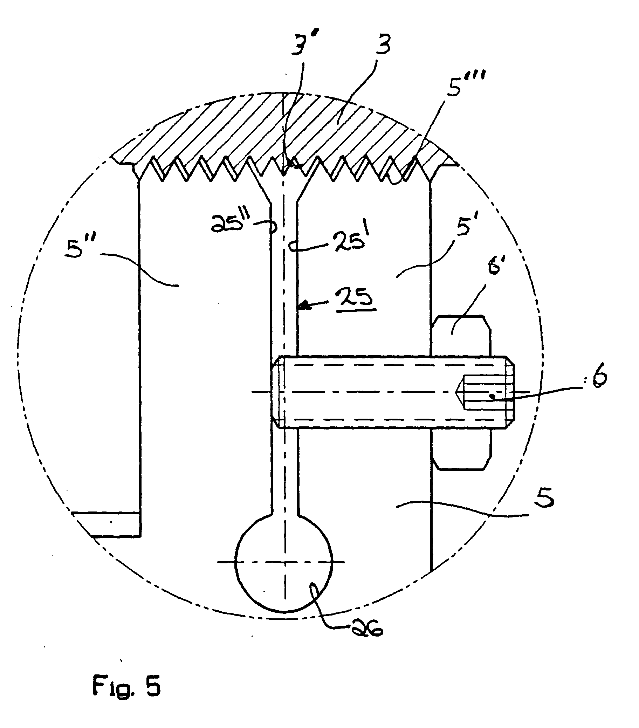

Backlash suppression means are provided to prevent backlash between the rotatable ring 3 and the crossbeam 5. In this respect, and as can be seen in Figure 1, the crossbeam 5 is provided at each of its ends with an elongate slot 25 with which a respective backlash suppression screw 6 is engaged. The backlash suppression means are shown more clearly in Figure 5 in which it can be seen that each elongate slot 25 is defined between facing slot surfaces 25' and 25". Each of the slots 25 extends substantially radially in the crossbeam 5 to a closed end 26. As is apparent from Figure 5, each slot 25 opens into the thread 5"' at the respective end of the crossbeam 5. As described above, each thread 5"' is engaged with the internal thread 3' of the rotatable ring 3. At least one backlash suppression screw 6, provided with a corresponding lock nut 6', extends in the crossbeam 5 to engage in the respective elongate slot 25. The end of the screw 6 engages the surface 25" of the elongate slot 25 such that the screw 6 tends to urge the facing surfaces 25' and 25" apart. This force urging the facing slot surfaces apart also acts to urge flanks of the thread 5"' against corresponding flanks of the thread 3' whereby backlash between these two engaged threads is suppressed.

As is apparent from Figures 1 and 3, holes as 4' are provided in the connecting flange 4 and through the rearwardly extending part of the cylindrical body 2 whereby access to the backlash suppression screws 6 is available. This enables the screws 6 to be adjusted, for example, by way of wrenches, in order that the pressure exerted between the threads 5"' and 3' can be controlled.

It will be appreciated that variations and modifications may be made to the embodiments described and illustrated herein within the scope of the accompanying claims.

## Claims

1. A boring device for finishing high precision bores comprising a generally cylindrical body (2), a tool supporting member (10) supported by and movable with respect to said cylindrical body, a rotatable ring (3) mounted on said body (2) for rotation about a longitudinal axis of the cylindrical body, and moving means (5, 7, 8) for causing linear movement of said tool supporting member (10) upon rotation of said rotatable ring (3), **characterised in that** said moving means (5, 7, 8) comprises a crossbeam (5) extending substantially perpendicularly to the longitudinal axis of said cylindrical body and received within an axially extending slot in said cylindrical body, said crossbeam carrying an elongate rod (7, 8) slidably engaged within said tool supporting member (10), and said crossbeam (5) being threadingly engaged with said rotatable ring (3) such that rotation of said ring causes linear movement of said crossbeam (5) within said axially extending slot.

2. A boring device as claimed in Claim 1, wherein said crossbeam (5) has a respective thread (5"') provided at each of its ends, said threads (5"') on said crossbeam directly engaging an internal thread (3') of said rotatable ring (3).

3. A boring device as claimed in Claim 1 or Claim 2, wherein said elongate rod (7, 8) is fixed to said crossbeam (5), and wherein said elongate rod comprises a first part (7) extending substantially along the longitudinal axis of said cylindrical body, and a second oblique part (8) extending at an angle to said longitudinal axis.

4. A boring device as claimed in Claim 3, wherein the oblique part (8) of said elongate rod is engaged with said tool supporting member (10), and wherein said tool supporting member (10) is mounted on said cylindrical body (2) for movement generally perpendicularly to the longitudinal axis of the cylindrical body.

5. A boring device as claimed in any of Claims 1 to 4, further comprising backlash suppression means (25, 6) for suppressing backlash between said crossbeam (5) and said rotatable ring (3), said backlash suppression means (25, 6) comprising at least one backlash suppression screw (6) arranged to suppress play between engaged threads of the crossbeam and said rotatable ring.

6. A boring device as claimed in Claim 5, wherein said backlash suppression means comprises an elongate slot (25), defined between facing slot surfaces (25', 25"), extending in said crossbeam (5) and opening into a thread (5"') of the crossbeam engaged with a thread (3') of the rotatable ring (3), and wherein the backlash suppression screw (6) extends in said crossbeam (5) to engage one of said facing slot surfaces (25") to urge said facing surfaces apart.

7. A boring device as claimed in Claim 6, wherein said crossbeam (5) has a respective thread (5"') at each of its ends, and wherein a respective elongate slot (25) and a corresponding backlash suppression screw (6) are associated with each thread (5"') of the crossbeam (5).

8. A boring device as claimed in Claim 6 or Claim 7, wherein a connecting flange (4) is fixed to said cylindrical body (2), and wherein aligned bores (4') in said connecting flange (4) and cylindrical body (2) enable access to the or each backlash suppression screw (6).

9. A boring device as claimed in any of Claims 6 to 8, wherein the or each backlash suppression screw (6) extends generally perpendicularly with respect to the or the respective elongate slot (25).

10. A boring device as claimed in any of Claims 6 to 9, wherein the or each elongate slot (25) extends substantially radially of said crossbeam (5).

11. A boring device as claimed in any preceding claim, wherein said rotatable ring (3) is mounted on said cylindrical body (2) by way of bearing balls (15).

12. A boring device as claimed in Claim 11, wherein a connecting flange (4) is connected to said cylindrical body (2), wherein bearing balls (15) are arranged at the spaced axial ends of said rotatable ring (3), and wherein the bearing balls (15) at one axial end of the rotatable ring (3) are mounted on said cylindrical body (2), and the bearing balls (15) at the other axial end of the rotatable ring (3) are mounted on said connecting flange (4).

13. A boring device as claimed in any preceding claim, wherein said rotatable ring (3) is arranged coaxially with respect to the longitudinal axis of said cylindrical body (2).

14. A boring device as claimed in Claim 13, wherein said rotatable ring (3) is manually rotatable and externally graduated.

## Patentansprüche

1. Bohrgerät zur Fertigstellung von hochpräzisen Bohrungen, das aufweist:
einen hauptsächlich zylindrischen Körper (2), ein Werkzeugstützteil (10), das durch den zylindrischen Körper gestützt wird und bezüglich dessen bewegbar ist, einen drehbaren Ring (3), der auf dem Körper (2) zur Drehung um eine Längsachse des zylindrischen Körperes angebracht ist, und eine Bewegungseinrichtung (5, 7, 8), um das Werkzeugstützteil (10) dazu zu veranlassen, bei Drehung des drehbaren Rings (3) lineare Bewegungen zu vollziehen, **dadurch gekennzeichnet, dass** die Bewegungseinrichtung (5,7,8) einen Querbalken (5) aufweist, der im wesentlichen senkrecht zur Längsachse des zylindrischen Körpers verläuft, und innerhalb eines axial verlaufenden Schlitzes in dem zylindrischen Körper aufgenommen wird, wobei der Querbalken einen länglichen Stab (7, 8) trägt, der gleitend in dem Werkzeugstützteil (10) in Eingriff ist, und der Querbalken (5) schraubbar mit dem drehbaren Ring (3) in Eingriff steht, so, dass eine Drehung des Ringes eine lineare Bewegung des Querbalkens (5) innerhalb des axial sich erstreckenden Schlitzes verursacht.

2. Bohrgerät nach Anspruch 1, wobei der Querbalken (5) ein entsprechendes Gewinde (5"')hat, mit dem jedes seiner Enden versehen ist, wobei die Gewinde (5"') auf dem Querbalken direkt mit einem inneren Gewinde (3') des drehbaren Rings (3) in Eingriff stehen.

3. Bohrgerät nach Anspruch 1 oder Anspruch 2, wobei der längliche Stab (7, 8) an dem Querbalken (5) befestigt ist, und wobei der längliche Stab einen ersten Teil (7) aufweist, der sich im wesentlichen entlang der Längsachse des zylindrischen Körperes erstreckt, und einen zweiten schrägen Teil (8), der sich unter einem Winkel zu der Längsachse erstreckt.

4. Bohrgerät nach Anspruch 3, wobei der schräge Teil (8) des länglichen Stabes mit dem Werkzeugstützteil (10) in Eingriff steht, und wobei das Werkzeugstützteil (10) an dem zylindrischen Körper (2) für eine Bewegung im allgemeinen senkrecht zur Längsachse des zylindrischen Körpers angebracht ist.

5. Bohrgerät nach einem der Ansprüche 1 bis 4, das außerdem eine Flankenspielunterdrückungseinrichtung (25, 6) zur Unterdrückung von Flankenspiel zwischen dem Querbalken (5) und dem drehbaren Ring (3), wobei die Flankenspielunterdrückungseinrichtung (25,6) zumindest eine Flankenspielunterdrückungsschraube (6) aufweist, die dazu angeordnet ist, Spiel zwischen den in Eingriff stehenden Gewinden des Querbalkens und des drehbaren Ringes zu unterdrücken.

6. Bohrgerät nach Anspruch 5, wobei die Flankenspielunterdrückungseinrichtung einen länglichen Schlitz (25) aufweist, der zwischen sich einander gegenüberstehenden Schlitzflächen (25',25") begrenzt ist, die sich in dem Querbalken (5) erstrecken und sich in ein Gewinde (5''') des Querbalkens öffnen, das mit einem Gewinde (3') des drehbaren Rings (3) in Eingriff steht, und wobei die Flankenspielunterdrückungsschraube (6) sich in dem Querbalken (5) erstreckt, um mit einer von den sich gegenüberstehenden Rillenflächen (25") in Eingriff zu sein, um die sich gegenüberstehenden Flächen auseinander zu drängen.

7. Bohrgerät nach Anspruch 6, wobei der Querbalken (5) ein entsprechendes Gewinde (5''') an jedem seiner Enden hat, und wobei ein entsprechender länglicher Schlitz (25) und eine entsprechende Flankenspielunterdrückungsschraube (6) mit jedem Gewinde (5"') des Querbalkens (5) in Verbindung stehen.

8. Bohrgerät nach Anspruch 6 oder Anspruch 7, wobei ein Verbindungsflansch (4) an dem zylindrischen Körper (2) befestigt ist, und wobei in einer Linie angeordnete Bohrlöcher (4') in dem Verbindungsflansch (4) und zylindrischen Körper (2) den Zugang zu der oder jeder Flankenspielsunterdrückungsschraube (6) ermöglichen.

9. Bohrgerät nach einem der Ansprüche 6 bis 8, wobei die oder jede Flankenspielunterdrückungsschraube (6) sich im allgemeinen senkrecht hinsichtlich dem oder dem entsprechenden Schlitz (25) erstreckt.

10. Bohrgerät nach einem der Ansprüche 6 bis 9, wobei sich der oder jeder Längsschlitz (25) im wesentlichen radial zu dem Querbalken (5) erstreckt.

11. Ein Bohrgerät nach einem der vorangehenden Ansprüche, wobei der drehbare Ring (3) auf dem zylindrischen Körper (2) mittels Lagerkugeln (15) angebracht ist.

12. Bohrgerät nach Anspruch 11, wobei ein Verbindungsflansch (4) mit dem zylindrischen Körper (2) verbunden ist, wobei Lagerkugeln (15) an den räumlich auseinanderliegenden Achsenenden des drehbaren Rings (3) angeordnet sind, und wobei die Lagerkugeln (15) an einem Achsenende des drehbaren Rings (3) auf dem zylindrischen Körper (2) angebracht sind, und die Lagerkugeln (15) am anderen Achsenende des drehbaren Rings (3) an dem Verbindungsflansch (4) angebracht sind.

13. Bohrgerät nach einem der vorangehenden Ansprüche, wobei der drehbare Ring (3) hinsichtlich der Längsachse des zylindrischen Körpers (2) axial angeordnet ist.

14. Bohrgerät nach Anspruch 13, wobei der drehbare Ring (3) manuell drehbar und äußerlich mit einer Gradeinteilung versehen ist.

## Revendications

1. Dispositif d'alésage pour des alésages à fini de haute précision comprenant un corps (2) globalement cylindrique, un élément (10) de support d'outil supporté par ledit corps cylindrique et mobile par rapport à celui-ci, une bague mobile en rotation (3) montée sur ledit corps (2) pour rotation autour d'un axe longitudinal du corps cylindrique, et un moyen moteur (5, 7, 8) pour provoquer un déplacement rectiligne dudit élément (10) de support d'outil lors d'une rotation de ladite bague mobile en rotation (3), **caractérisé en ce que** ledit moyen moteur (5, 7, 8) comprend une traverse (5) s'étendant sensiblement perpendiculairement à l'axe longitudinal dudit corps cylindrique et étant reçue à l'intérieur d'une fente s'étendant axialement dans ledit corps cylindrique, ladite traverse portant une tige allongée (7, 8) engagée coulissante à l'intérieur dudit élément (10) de support d'outil, et ladite traverse (5) engageant par vissage ladite bague mobile en rotation (3) de façon qu'une rotation de ladite bague mobile provoque un déplacement rectiligne de ladite traverse (5) à l'intérieur de ladite fente s'étendant axialement.

2. Dispositif d'alésage selon la revendication 1, dans lequel ladite traverse (5) comporte un filetage respectif (5''') réalisé à chacune de ses extrémités, lesdits filetages (5''') réalisés sur ladite traverse engageant directement un filetage intérieur (3') de ladite bague mobile en rotation (3).

3. Dispositif d'alésage selon la revendication 1 ou la revendication 2, dans lequel ladite tige allongée (7, 8) est fixée à ladite traverse (5), et dans lequel ladite tige allongée comprend une première partie (7) s'étendant sensiblement le long de l'axe longitudinal dudit corps cylindrique, et une seconde partie oblique (8) s'étendant à un certain angle par rapport audit axe longitudinal.

4. Dispositif d'alésage selon la revendication 3, dans lequel la partie oblique (8) de ladite tige allongée engage ledit élément (10) de support d'outil, et dans lequel ledit élément (10) de support d'outil est monté sur ledit corps cylindrique (2) pour un déplacement globalement perpendiculaire à l'axe longitudinal du corps cylindrique.

5. Dispositif d'alésage selon l'une quelconque des revendications 1 à 4, comprenant en outre un moyen (25, 6) de suppression de jeu destiné à supprimer un jeu entre ladite traverse (5) et ladite bague mobile en rotation (3), ledit moyen (25, 6) de suppression de jeu comprenant au moins une vis (6) de suppression de jeu agencée pour supprimer le jeu entre les filets engagés de la traverse et de ladite bague mobile en rotation.

6. Dispositif d'alésage selon la revendication 5, dans lequel ledit moyen de suppression de jeu comprend une fente allongée (25), définie entre des surfaces de fente se faisant face (25', 25''), s'étendant dans ladite traverse (5) et débouchant dans un filetage (5''') de la traverse engagée avec un filetage (3') de la bague mobile en rotation (3), et dans lequel la vis (6) de suppression de jeu s'étend dans ladite traverse (5) pour engager l'une (25'') desdites surfaces de fente se faisant face pour écarter lesdites surfaces se faisant face.

7. Dispositif d'alésage selon la revendication 6, dans lequel ladite traverse (5) comporte un filetage respectif (5''') à chacune de ses extrémités, et dans lequel une fente allongée respective (25) et une vis (6) de suppression de jeu correspondante sont associées à chaque filetage (5''') de la traverse (5).

8. Dispositif d'alésage selon la revendication 6, ou la revendication 7, dans lequel une bride de liaison (4) est fixée audit corps cylindrique (2), et dans lequel des alésages alignés (4') réalisés dans ladite bride de liaison (4) et dans ledit corps cylindrique (2) permettent un accès à la, ou chaque, vis (6) de suppression de jeu.

9. Dispositif d'alésage selon l'une quelconque des revendications 6 à 8, dans lequel la, ou chaque, vis (6) de suppression de jeu s'étend globalement perpendiculairement à la fente allongée (25), ou à la fente allongée respective.

10. Dispositif d'alésage selon l'une quelconque des revendications 6 à 9, dans lequel la, ou chaque, fente allongée (25) s'étend sensiblement radialement à ladite traverse (5).

11. Dispositif d'alésage selon l'une quelconque des revendications précédentes, dans lequel ladite bague mobile en rotation (3) est montée sur ledit corps cylindrique (2) au moyen de billes de roulement (15).

12. Dispositif d'alésage selon la revendication 11, dans lequel une bride de liaison (4) est connectée audit corps cylindrique (2), dans lequel les billes de roulement (15) sont agencées aux extrémités axiales espacées de ladite bague mobile en rotation (3), et dans lequel les billes de roulement (15), au niveau de la première extrémité axiale de la bague mobile en rotation (3), sont montées sur ledit corps cylindrique (2), et les billes de roulement (15), au niveau de l'autre extrémité axiale de la bague mobile en rotation (3), sont montées sur ladite bride de liaison (4).

13. Dispositif d'alésage selon l'une quelconque des revendications précédentes, dans lequel ladite bague mobile en rotation (3) est agencée de manière coaxiale à l'axe longitudinal dudit corps cylindrique (2).

14. Dispositif d'alésage selon la revendication 13, dans lequel ladite bague mobile en rotation (3) peut être tournée manuellement et est graduée extérieurement.
